# EUROPEAN PATENT APPLICATION

(11) **EP 1 357 488 A1**
(43) Date of publication of application: **29.10.2003**
(21) Application number: 01271848.2
(22) Date of filing: 20.12.2001
(51) Int. Cl.: G06F 17/60

(54) **FACILITY RESERVATION SYSTEM, FACILITY RESERVATION APPARATUS, AND FACILITY RESERVATION METHOD**

(30) Priority: 22.12.2000 JP 2000404531
(71) Applicant: ARKRAY, Inc., Kyoto-shi, Kyoto 601-8045 (JP)
(72) Inventor: TAKADA, Norihiko, Kyoto, 601-8045 (JP)
(74) Representative: Piésold, Alexander J.
(86) International application number: JP0111161
(87) International publication number: WO02052465

(57) **Abstract**

A facility reservation apparatus (1) that includes a reservation receiving portion (11) that receives input of reservation information including a reservation date/time from a user terminal (2) external to the system, a related-information portion (12) that obtains information related to facility use from related-information storage devices (3 to 6) enabling a user to use the time until the reservation effectively, and an information providing portion (13) that, in the event of input of a request for information related to facility use from the user terminal (2), causes the related-information portion (12) to obtain information related to facility use, and provides the obtained information related to facility use to the user terminal (2).

## Description

### TECHNICAL FIELD

The present invention relates to facility reservation systems, facility reservation apparatuses, and facility reservation methods that carry out reservations for facilities such as hospitals.

### BACKGROUND ART

Conventionally, in the case of using the facilities of hospitals and the like, long periods of waiting have been endured by the user. Various methods and apparatuses have been proposed to solve this problem. For example, a hospital reservation method and hospital reservation apparatus are disclosed in JP H6-141094A, which carry out appointments and callings for the order of medical appointments at a hospital. The following is a more specific explanation of this.

First, when a patient phones the hospital to make an appointment for a consultation, the patient receives questions concerning the medical appointment from a waitlist computer that is connected to the hospital's phone system. When the patient answers the questions, the waitlist computer automatically reserves a date/time for the hospital visit and a course of medical care based on the answers, and lets the patient know the date/time of the appointment.

After that, the patient goes to the reception of the hospital on the day of the appointment. A hospital receptionist enters the patient's identification data at an identification data input unit that is connected to the waitlist computer and an automatic calling apparatus. The patient is handed a calling device that receives an electromagnetic wave-based calling signal from the automatic calling apparatus to let the patient know that he has been called. When it is time for the appointment, or when it becomes the patient's turn, the automatic calling apparatus issues a calling signal, and the calling device that receives the calling signal produces a calling sound, notifying the patient of his turn for an appointment.

In this way, with the above-described hospital reservation method and hospital reservation apparatus, the hospital can automatically attend to reservations from patients. Additionally, the patient can reserve the facilities of hospitals and the like easily, and can receive a calling for the patient's appointment time, or his or her turn for an appointment, without being subjected to the effects of congested environments such as waiting rooms.

However, it can be said that the above-described hospital reservation method and hospital reservation apparatus is not capable of notifying the patient of a suitable time to leave his or her residence or place of work, etc., in order to go to the hospital at the time of the appointment.

For this reason, when the patient goes to the hospital for the appointment by car, for example, since the patient does not know the traffic conditions of the route to the hospital or whether the parking lot is congested or not, it is necessary for the patient to depart with time to spare, so that, when using the above-described hospital reservation method and hospital reservation apparatus, there is effectively no difference in the time it takes from the patient departing until the patient attends the medical appointment.

Furthermore, sometimes the hospital parking lot is congested and full for extended periods, and since time is required between arriving at the hospital and parking at the hospital parking lot, it is necessary at these times for the patient to depart with time to spare, and despite the effort required to make an appointment, effectively there is a problem of increased time spent waiting at the hospital.

An object of the present invention is to solve this problem, and to offer a facility reservation system, facility reservation apparatus, and facility reservation method that provide information in order for a user with a reservation to be able to more effectively use the time until the reservation at the facility of the reservation or in its vicinity.

### DISCLOSURE OF INVENTION

In order to achieve the above-mentioned object, the facility reservation system of the present invention is a facility reservation system in which input of reservation information including a date/time of a reservation is received from an external user terminal and a facility reservation is preformed. It includes a facility reservation apparatus that receives input of reservation information including the date/time of a reservation from the user terminal, and a related-information storage device that stores information related to facility use so that the user can use the time until the time of the reservation effectively. In the event of a request for information related to facility use from the user terminal, the facility reservation apparatus causes the related-information storage device to send information related to facility use, and sends the sent information related to facility use to the user terminal.

In this way, unlike conventional methods, by using the facility reservation system of the present invention, the user can obtain information related to facility use, and the time from departure until the time of the reservation is not wasted.

In the facility reservation system of the present invention, it is also possible to offer information related to facility use that changes with the passing of time. In this case, it is preferable for the above-described facility reservation system of the present invention to be further provided with a reservation information storage device, which issues a reservation information identifier for the received reservation information, communicates the reservation information identifier to the user terminal, and stores the reservation information in association with the reservation information identifier. Furthermore, in this situation, in the event of a request for information related to facility use from the user terminal, it is preferable that the facility reservation apparatus retrieves the stored reservation information based on the reservation information identifier of the user, and the related-information storage device is caused to send the information related to facility use related to the date/time of the reservation included in the retrieved reservation information.

Moreover, in order to achieve the above-mentioned object, the facility reservation apparatus of the present invention is a facility reservation apparatus that receives input of reservation information including a reservation date/time from an external user terminal and performs a facility reservation, and includes a reservation receiving portion that receives input of reservation information including the reservation date/time from the user terminal, a related-information portion that obtains information related to facility use so that the user can use the time until the time of the reservation effectively, and an information providing portion that, in the event of a request for information related to facility use from the user terminal, causes the related-information portion to obtain the information related to facility use, and provides the obtained information related to facility use to the user terminal.

In this way, unlike conventional methods, by using the facility reservation apparatus of the present invention, the user can obtain information related to facility use, and the time from departure until the time of the reservation is not wasted.

With the facility reservation apparatus of the present invention, it is possible to provide information related to facility use that changes with the passing of time. In this case, it is preferable that a reservation information identifier is issued for the reservation information received by the reservation receiving portion, and that the reservation information is communicated to the user terminal by the reservation receiving portion. Furthermore, in the event of a request for information related to facility use from the user terminal, it is preferable that the information providing portion obtains the reservation information based on the reservation information identifier of the user, and the related-information portion is made to obtain information related to facility use related to the reservation time/date included in the obtained reservation information.

Moreover, the issuance of the reservation information identifier may be performed by an external device, and reservation information received by the reservation receiving portion may be stored by the external device in association with the reservation information identifier.

Furthermore, the facility reservation apparatus of the present invention may be provided with a reservation information storage portion, and the reservation information identifier may be issued by the reservation information storage portion, with the reservation information being stored in association with the reservation information identifier.

Furthermore, in order to achieve the above-mentioned object, the facility reservation method of the present invention is a facility reservation method that receives input of reservation information including a date/time of a reservation from a user terminal and performs a facility reservation, and it includes, (a) a step of receiving input of reservation information including a date/time of a reservation from the user terminal, (b) a step of receiving requests for information related to facility use from the user terminal so that the user can use the time effectively until the time of the reservation, and (c) a step of providing the requested information related to facility use to the user terminal.

With the facility reservation method of the present invention, it is possible to provide information related to facility use that changes with the passing of time. In this case, it is preferable that, in step (a), a reservation information identifier is issued for the received reservation information and the reservation information identifier is communicated to the user, and it is also preferable that, in step (b), in the event of a request for information related to facility use from the user terminal, based on the reservation information identifier of the user, information related to facility use is obtained that is related to the date/time of the reservation included in the reservation information.

In this way, unlike conventional methods, by using the facility reservation method of the present invention, since the user can obtain information related to facility use, the time from departure until the time of the reservation is not wasted.

Moreover, the present invention may be a program that enables a more concrete realization of the facility reservation method of the present invention. In this case, by installing and executing the program on a computer, the facility reservation method of the present invention can be implemented.

Specific examples of the types of information related to facility use in the present invention include at least one of the following: information about the use of public transportation to a facility, road information, parking lot information, information about the grounds of a facility, and information about the vicinity of a facility.

The information about the use of public transportation to a facility refers to information that enables the user to travel to a facility using public transportation. Examples include the transportation link information for forms of public transportation, such as trains and buses, that are used by the user to travel from the point of departure to the facility, as well as timetable information and the like. By providing information related to the use of public transportation, it is possible to make the user aware of the order of the most favorable transportation connections in order to arrive at the facility at the appointed time, so there is no need to depart with excessive time to spare.

The road information refers to information that enables the user to travel to a facility using a private automobile or the like. Examples include information about routes to a facility, as well as standard travel times and information about traffic delays. By providing road information, there is no need for the user to depart with excessive time to spare, even for car travel, for which it is difficult to estimate the time of arrival.

The parking lot information also refers to information that enables the user to travel to a facility using a private automobile or the like. Examples include information about the conditions of congestion at hospital or area parking lots. By providing parking lot information, it is possible for the user to avoid the time wasted when there is no parking space even though the user has arrived early. Moreover, if the user can know in advance that the parking lots are congested and that it will take time to get a parking space, it is possible to switch over to the use of public transportation.

Examples of the information about the grounds of a facility and about the vicinity of a facility include information about the congestion of restaurants in and nearby the facility, and the recommended meals of the day, as well as the locations of shops, bookstores, florists, and fruit shops, etc., in and nearby the facility. By providing the facility and facility-vicinity information, the user can be made aware of the conditions of congestion of restaurants in and nearby the hospital, so there is no need to be kept waiting at restaurants. Additionally, since the user is also able to grasp information about the vicinity of the hospital, he can determine whether or not it is necessary to buy a visiting gift in advance.

### BRIEF DESCRIPTION OF DRAWINGS

FIG. 1 shows a facility reservation system and a facility reservation apparatus according to an embodiment of the present invention.
FIG. 2 is a flowchart that shows a facility reservation method according to an embodiment of the present invention.
FIG. 3 shows an example of a screen that is displayed on a user terminal in the event of a request for information related to facility use.

### BEST MODE FOR CARRYING OUT THE INVENTION

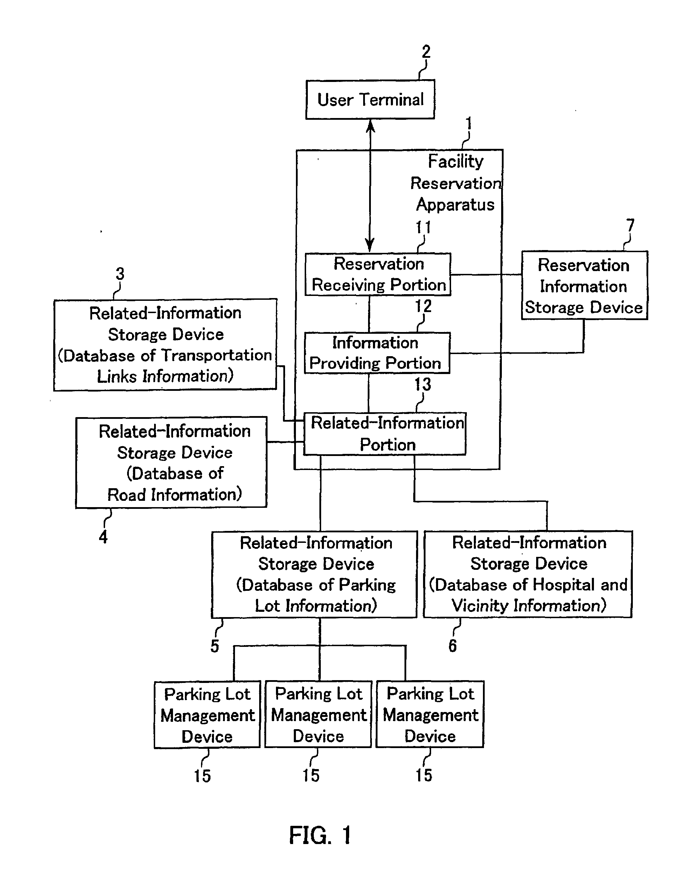

Referring to the accompanying drawings, the following is an explanation of embodiments of the facility reservation system, facility reservation apparatus, and facility reservation method of the present invention. First, an explanation will be given concerning the facility reservation system and facility reservation apparatus according to an embodiment of the present invention based on FIG. 1. FIG. 1 shows a facility reservation system and a facility reservation apparatus according to an embodiment of the present invention.

The facility reservation system according to this embodiment is a system that receives input of reservation information, including the day and time of the reservation, from a user terminal that is external to the system, and performs reservations. An explanation of this embodiment will be given using the situation of hospital facilities.

As shown in FIG. 1, the facility reservation system of the present embodiment has: a facility reservation apparatus 1 that receives an input of reservation information, including the user's desired day and time of the reservation; a reservation information storage device 7, and related-information storage devices 3 to 6 that store information related to facility use.

In the present invention, "information related to facility use" refers to information for the purpose of the user effectively using the time until the reserved time, particularly to information for the purpose of the user effectively using the time from when the user departs toward the facilities until the reserved time. Examples of this include information related to the use of public transportation to the facilities, traffic information, parking lot information, information about the grounds of a facility, information about the vicinity of a facility, and so on. The specifics of these will be discussed later.

The reference numeral 2 refers to a user terminal for the user to carry out communication with the facility reservation apparatus 1. In this embodiment, the user terminal 2 is a portable terminal such as a mobile telephone or a PDA, or a computer, and is connected to the facility reservation apparatus 1 via the Internet. Input and output of information via the user terminal 2 to and from the facility reservation apparatus 1 are carried out on a web page.

It should be noted that communication between the facility reservation apparatus 1 and the user terminal 2 can be performed by e-mail. Furthermore, in accordance with the invention, the user terminal 2 may be a telephone that is connected to the facility reservation apparatus 1 by a telephone line.

The facility reservation apparatus 1 of this embodiment is provided with a reservation receiving portion 11, an information providing portion 12, and a related-information portion 13. The reservation receiving portion 11 is connected to the user terminal 2 and exchanges data with the user terminal 2. The reservation information that the user inputs on the screen of the user terminal 2, such as the date/time of the reservation (desired date/time of the reservation), the medical department, symptoms, and so on is received by the reservation receiving portion 11. Additionally, if the user requests information related to facility use, the request is received by the reservation receiving portion 11 and then sent to the information providing portion 12.

The reservation information that the user inputs from the user terminal 2 is stored in a reservation information storage device 7. The reservation information storage device 7 is a server computer that functions as a hospital reservation information database. When storing reservation information, the reservation information storage device 7 issues a reservation reception number for the reservation information, then stores the reservation information associated with the reservation reception number. The issued reservation reception number is sent to the user terminal 2 via the reservation receiving portion 11.

It should be noted that, although a reservation reception number is issued for the reservation information in this embodiment, the present invention is not limited to this. In the present invention, it is sufficient as long as there is a reservation information identifier capable of identifying the reservation information, and the reservation information identifier also may include alphabetic or other characters.

The information providing portion 12 obtains from the related-information portion 13 the information related to facility use requested by the user using the user terminal 2, and sends the obtained information related to facility use to the user terminal 2 via the reservation receiving portion 11.

If the information related to facility use that the user requests is information that changes over time, for example, if it is information related to the use of public transportation, traffic delay information, or information concerning the spaces available at a parking lot or the like, then the related-information portion 13 accesses external related-information storage devices 3 to 6 and obtains the requested information related to facility use.

In this embodiment, information that does not change over time, or changes after long intervals such as monthly or yearly intervals, such as illustrations of the hospital grounds and maps of the facilities' vicinity, is also stored in the external related-information storage device 6.

It should be noted that it is also possible to store such information that does not change over time, or changes after long intervals such as monthly or yearly intervals, in the facility reservation apparatus. When a user requests information that is stored in the facility reservation apparatus, the related-information portion 13 retrieves the stored information and sends it to the information providing portion 12.

In this embodiment, the facility reservation system is provided with four related-information storage devices 3 to 6. In the present invention, there is no particular limitation to the number of related-information storage devices, and these should be provided corresponding to the types of facilities and user demand, etc.

In this embodiment, the related-information storage device 3 is a server computer functioning as a database of transportation links information that stores information related to the use of public transportation and fares, etc. The user can find out the transportation links and time required to arrive from the specified departure station to the station closest to the hospital, and can use the time of the trip to and from the hospital effectively.

The related-information storage device 4 is a server computer functioning as a road information database that stores information related to map data of the hospital area and traffic delay information related to the date/time of the reservation. The user can find out the most suitable route to the hospital from his residence or place of work, and can use the time of the trip to and from the hospital effectively.

Additionally, the related-information storage device 5 is a server computer functioning as a parking lot information database that stores information related to the congestion of the parking lots on the hospital grounds. The related-information storage device 5 can be further connected to a parking lot management device 15 of the hospital vicinity and provide information related to the congestion of the parking lots in the vicinity of the hospital. The user easily can find a parking lot with a vacant space and reduce the time spent waiting for a parking lot to a minimum.

The related-information storage device 6 is a database of hospital information and vicinity information that stores information related to the menus and congestion of restaurants in and near the hospital, illustrations of the hospital grounds, locations of shops inside the hospital, and businesses in the vicinity of the hospital, and so on. The user can find out what meals are available in and near the hospital, and whether or not a gift for visiting a patient can be purchased.

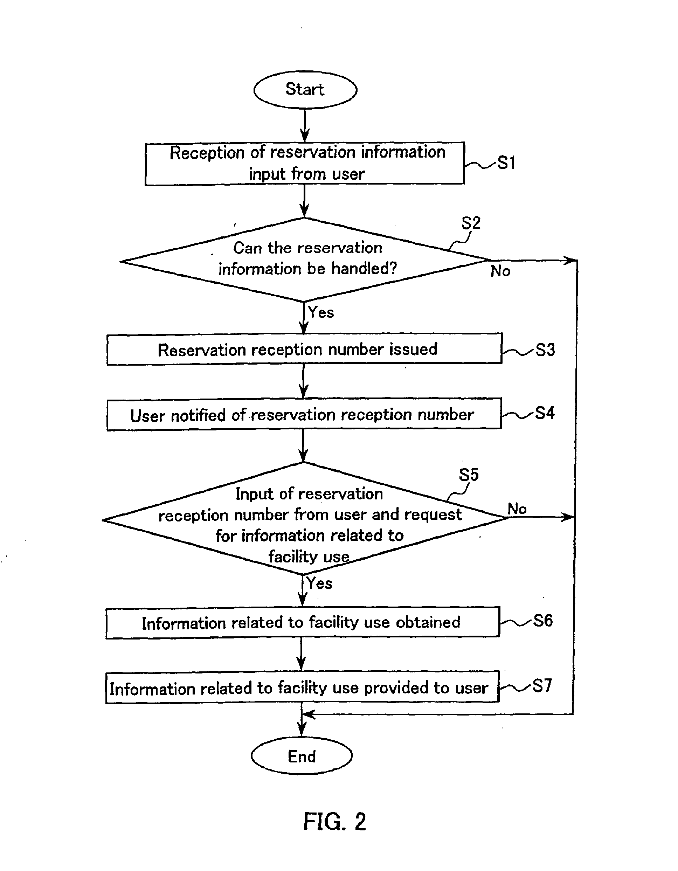

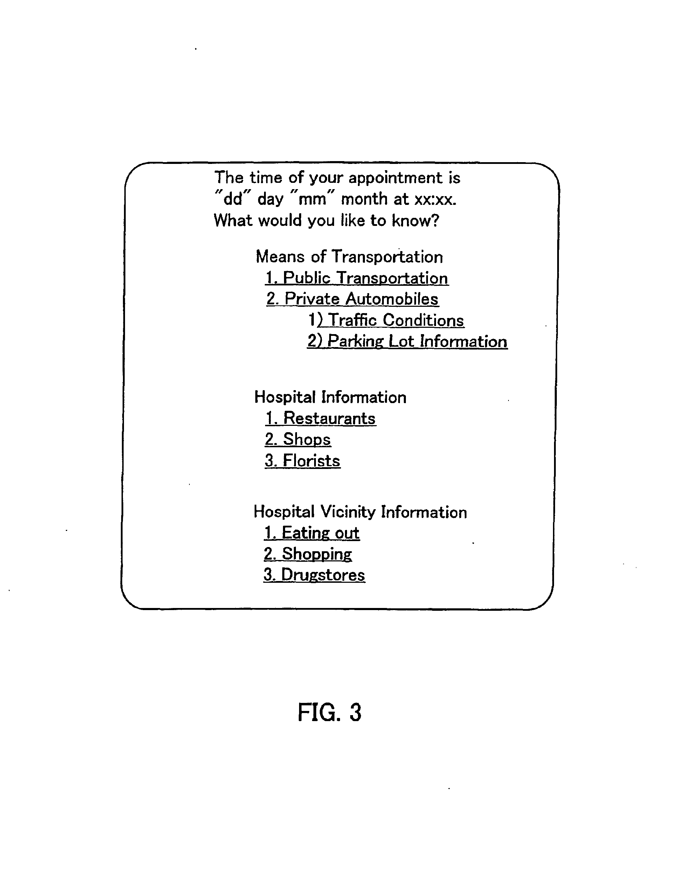

Next, operation of the facility reservation system and facility reservation apparatus according to an embodiment of the present invention, and the facility reservation method according to an embodiment of the present invention, will be explained based on FIG. 2 and FIG. 3. The facility reservation method of this embodiment can be implemented by operating the facility reservation apparatus of this embodiment. Also note that FIG. 1 is referenced when appropriate.

FIG. 2 is a flowchart that shows a facility reservation method of this embodiment. FIG. 3 shows an example of a screen that is displayed on a user terminal in the event of a request for information related to facility use.

As shown in FIG. 2, first, reservation information input from a user terminal 2 is received by the reservation receiving portion 11 (Step S1). Specifically, this is performed by the reservation receiving portion 11 receiving the reservation information sent from the user terminal 2.

The reservation receiving portion 11 then determines whether or not it is possible to accept the input reservation information (Step S2). Specifically, reservation receiving portion 11 accesses the reservation information storage device 7 and confirms whether or not it is possible to accept the receive reservation information.

When it is determined that the reservation information cannot be accepted, a message is made to display on the user terminal 2 to the effect that the reservation cannot be made and urges the user to input reservation information again for a different date/time.

Conversely, when it is determined that the reservation information can be accepted, a reservation reception number is issued for the input reservation information by the reservation information storage device 7 (Step S3). The input reservation information is associated with the reservation reception number and stored by the reservation information storage device 7.

After this, the reservation reception number is sent from the reservation information storage device 7 to the reservation receiving portion 11, and the reservation reception number and a message that the reservation has been made are sent by the reservation receiving portion 11 to the user terminal 2, notifying the user of the reservation reception number (Step S4).

The above-described steps S1 to S4 complete the reception of the reservation. After the reception of the reservation is finished, the user can use the user terminal 2 to request information related to facility use until the date/time of the reservation.

Next, it is determined whether or not the user has connected to the reservation receiving portion 11 from the user terminal 2 and requested information related to facility use (Step S5). In this embodiment, the user is required to input a reservation reception number when requesting information related to facility use. When, along with the input of a reservation reception number, there is a request for information related to facility use, reservation information is obtained by the information providing unit 12 from the reservation information storage device 7 based on that reservation reception number.

Next, information related to facility use, which is related to the date/time of the reservation contained in the obtained reservation information, is obtained by the related-information portion 13 (Step S6). At this time, the contents shown in FIG. 3 are displayed at the user terminal 2, and the user can select required information. In response to the type of information requested by the user, the related-information portion 13 accesses one of the related-information storage devices 3 to 6 and procures information.

The information related to facility use procured by the related-information portion 13 is sent to the information providing portion 12, and is then further supplied to the user by being sent by the reservation receiving portion 11 to the user terminal 2 (Step S7). Supply to the user of information related to facility use is performed by displaying the information related to facility use on the screen of the user terminal 2 as a web page.

The following is an explanation of each category of information related to facility use concerned in Step S6 and Step S7. For example, in the case of a user who desires to obtain information related to facility use in order to use public transportation to travel to the hospital, the user can click "public transportation" shown in FIG. 3. The screen on the user terminal 2 then changes to a screen requesting input of the "station of departure" (not shown in the figure), so the user can then input the name of the station at which the user will board a train or a bus to go to the hospital.

When the reservation receiving portion 11 receives the "station of departure" from the user terminal 2, the "station of departure," the "station closest to the hospital," and the "reservation date/time" are sent to the related-information storage device 3 (a database of transportation links information) by the related-information portion 13. Based on the sent data, the related-information storage device 3 searches for transportation-link information that will enable the user to arrive at the station closest to the hospital from the station of departure in time for the reservation date/time, then sends the transportation-link information that has been found to the related-information portion 13. Next, the transportation-link information that has been found is sent from the related-information portion 13 to the information providing portion 12, and is then sent to the user terminal 2 via the reservation receiving portion 11. As a result, transportation-link guidance and the time of arrival are displayed on the screen of the user terminal 2.

If the user wishes to obtain information related to facility use in order to use a private automobile to travel to the hospital, the user can click "traffic conditions" or "parking lot information," which are displayed under "private automobiles" in FIG. 3.

When the user clicks "traffic conditions," the screen on the user terminal 2 changes to a screen requesting input of the "departure point" (not shown in the figure), so the user can then input the address of the departure point.

When the reservation receiving portion 11 receives the "departure point address" from the user terminal 2, the "departure point address" and the "reservation date/time" are sent to a related-information storage device 4 (a database of road information) by the related-information portion 13. Based on the sent data, the related-information storage device 4 searches for the most favorable route to the hospital from the departure point, and then sends the most favorable route to the related-information portion 13. Next, the most favorable route that has been found is sent from the related-information portion 13 to the information providing portion 12, and is then sent to the user terminal via the reservation receiving portion 11. As a result, the most favorable route is displayed on the screen of the user terminal 2.

When there is little time between the current time and the date/time of the reservation (for example, one hour before the time of the reservation), the related-information storage device 4 sends to the related-information portion 13 the latest information it has obtained of the traffic conditions from the departure point to the hospital. On the other hand, when there is a comparatively long length of time between the current time and the date/time of the reservation (for example, two hours or more before the time of the reservation, or the day before the reservation), information about the average traffic conditions for the same day and the same time as the day/time of the reservation is sent to the related-information portion 13.

The information of traffic conditions is then sent from the related-information portion 13 to the information providing portion 12, and sent to the user terminal via the reservation receiving portion 11. As a result, the current traffic conditions, or the average traffic conditions for the same day and the same time as the day/time of the reservation, are displayed on the screen of the user terminal 2.

When the user clicks "parking lot information," the "reservation date/time" is sent by the related-information portion 13 to the related-information storage device 5 (a database of parking lot information). The related-information storage device 5 refers to the reservation date/time and sends parking lot congestion information to the related-information portion 13.

In this case too, as in the case of the above-mentioned information of traffic conditions, when there is little time between the current time and the date/time of the reservation, the related-information storage device 5 sends the current parking lot congestion information to the related-information portion 13. At this time, if the hospital parking lot is "full," the related-information storage device 5 sends this information, as well as parking lot congestion information procured by accessing parking lot management devices 15 of parking lots in the vicinity of the hospital that are connected and capable of transmitting parking lot information, to the related-information portion 13.

After this, information concerning the current congestion of the hospital parking lot or the parking lots in the vicinity of the hospital is sent from the related-information portion 13 to the information providing portion 12, and then further sent to the user terminal 2 via the reservation receiving portion 11. As a result, the current congestion conditions of the hospital parking lot or the parking lots in the vicinity of the hospital are displayed on the screen of the user terminal 2.

On the other hand, when there is a comparatively long length of time between the current time and the date/time of the reservation, the related-information storage device 5 sends to the related-information portion 13 information about the congestion conditions of the hospital parking lot and the parking lots in the vicinity of the hospital for the same day and the same time as the day/time of the reservation. After this, information about the congestion conditions of the hospital parking lot and the parking lots in the vicinity of the hospital for the same day and the same time as the day/time of the reservation is sent from the related-information portion 13 to the information providing portion 12, and then further sent to the user terminal 2 via the reservation receiving portion 11. As a result, information about the congestion conditions of the hospital parking lot and the parking lots in the vicinity of the hospital for the same day and the same time as the day/time of the reservation is displayed on the screen of the user terminal 2.

If there are no vacant spaces in the hospital parking lot or the parking lots in the vicinity of the hospital at the present time, or at the same date and same time as the reservation, a message is sent to the user terminal 2 saying, "please use public transportation."

Moreover, if the user wishes to obtain information related to restaurants within the hospital grounds, the user can click "restaurants," which is displayed under "hospital information" in FIG. 3. If the user wishes to obtain information related to restaurants in the vicinity of the hospital, the user can click "eating out," which is displayed under "hospital vicinity information" in FIG. 3.

When the user clicks "restaurants" or "eating out," the "reservation date/time" is sent by the related-information portion 13 to the related-information storage device 6 (a database of hospital and vicinity information). The related-information storage device 6 refers to the reservation date/time and sends to the related-information portion 13 information related to the congestion conditions of the restaurants in and nearby the hospital, the recommended meals of the day, and the daily meal specials. Information about the congestion conditions of the restaurants, the recommended meals of the day, and the daily meal specials is displayed on the screen of the user terminal 2.

Moreover, if the user wishes to obtain information related to florists within the hospital grounds, the user can click "florists," which is displayed under "hospital information" in FIG. 3. In this situation, information about the location of florists and their prices is sent from the related-information storage device 6 to the related-information portion 13. The location of florists and their prices is displayed on the screen of the user terminal 2.

If the user wishes to obtain information related to the businesses nearby the hospital (such as florists, fruit shops, and drugstores), the user can click "shopping" or "drugstores," which are displayed under "hospital vicinity information" in FIG. 3.

When the user the clicks "shopping," information such as that of the location and products available from the stores, bookstores, florists, and fruit shops, etc., nearby the hospital is sent to the related-information portion 13 from the related-information storage device 6. And when the user clicks "drugstores," information such as the location of prescription drugstores nearby the hospital is sent to the related-information portion 13 from the related-information storage device 6. The contents of these kinds of information also are displayed on the screen of the user terminal 2.

In this way, by using a facility reservation system, a facility reservation apparatus, and a facility reservation method according to this embodiment, the user can know the length of time between departing and arriving at the reserved facility. In particular, when traveling by automobile, even though generally it is difficult to estimate the time until arrival, since with this embodiment, even traffic and parking lot conditions can be known, the time until arrival can be estimated easily. Furthermore, as the user can be made aware of the congestion conditions of the restaurants inside and nearby the hospital, the need to wait at restaurants can be reduced. Moreover, since the user can grasp the information of the area around the hospital, he can determine whether or not it is necessary to buy a visiting gift in advance.

The situation of a hospital has been used as an illustrative example of this embodiment, but this is not a limitation of the present invention. The facility reservation system, facility reservation apparatus, and facility reservation method of the present invention may also be applied to reservations in such situations as beauty parlors, sports events, and concerts.

Also, the facility reservation apparatus of this embodiment can be obtained by installing in a computer a computer program that instructs the computer to perform Step S1 to Step S7 shown in FIG. 2 and executing the program.

The related-information storage devices 3 to 6 in this embodiment are each configured as an independent computer. However, of the related-information storage devices 3 to 6, related-information storage devices 5 and 6 can be substituted by a computer that is part of the facility reservation apparatus.

Furthermore, in this embodiment, the facility reservation apparatus 1 and the reservation information storage device 7 are separate pieces of equipment, but it is also possible to provide within the facility reservation apparatus 1 a reservation information storage portion that has the same functions as the reservation information storage device 7, thus making the facility reservation apparatus 1 and the reservation information storage device 7 a single piece of equipment.

### INDUSTRIAL APPLICABILITY

As shown above, by using the facility reservation system, facility reservation apparatus, and facility reservation method of the present invention, users can avoid wastefully spending the time available until the reservation time. In this way, it becomes unnecessary to depart with time to spare, and the user can avoid conditions that result in waiting such as those of reasons related to not being able to get a parking space. The user can use the time until the reservation effectively.

## Claims

1. A facility reservation system that receives input of reservation information including a date/time of a reservation from an external user terminal and performs a facility reservation, comprising:
a facility reservation apparatus that receives input of reservation information including the date/time of a reservation from the user terminal; and
a related-information storage device that stores information related to facility use so that the user can use the time until the time of the reservation effectively;
wherein, in the event of a request for information related to facility use from the user terminal, the facility reservation apparatus causes the related-information storage device to send information related to facility use, and sends the sent information related to facility use to the user terminal.

2. The facility reservation system according to claim 1,
wherein the information related to facility use changes over time; and the facility reservation system further comprises:
a reservation information storage device, which issues a reservation information identifier for the received reservation information, communicates the reservation information identifier to the user terminal, and stores the reservation information in association with the reservation information identifier;
wherein, in the event of a request for information related to facility use from the user terminal, the facility reservation apparatus retrieves the stored reservation information based on the reservation information identifier of the user, and causes the related-information storage device to send the information related to facility use that is related to the date/time of the reservation included in the retrieved reservation information.

3. The facility reservation system according to claim 1,
wherein the information related to facility use comprises at least one of the group consisting of information about the use of public transportation to a facility, road information, parking lot information, information about the grounds of a facility, and information about the vicinity of a facility.

4. A facility reservation apparatus that receives input of reservation information including a reservation date/time from an external user terminal and performs a facility reservation, comprising:
a reservation receiving portion that receives input of reservation information including the reservation date/time from the user terminal;
a related-information portion that obtains information related to facility use so that the user can use the time until the time of the reservation effectively; and
an information providing portion that, in the event of a request for information related to facility use from the user terminal, causes the related-information portion to obtain the information related to facility use, and provides the obtained information related to facility use to the user terminal.

5. The facility reservation apparatus according to claim 4,
wherein the information related to facility use changes over time;
wherein a reservation information identifier is issued for the reservation information received by the reservation receiving portion, and the reservation information identifier is communicated to the user terminal by the reservation receiving portion; and
wherein, in the event of a request for information related to facility use from the user terminal, the information providing portion obtains the reservation information based on the reservation information identifier of the user, and causes the related-information portion to obtain information related to facility use related to the reservation time/date included in the obtained reservation information.

6. The facility reservation apparatus according to claim 5,
wherein the reservation information identifier is issued by an external device, and reservation information received by the reservation receiving portion is associated with the reservation information identifier and stored by the external device.

7. The facility reservation apparatus according to claim 5 further comprising:
a reservation information storage portion that issues a reservation information identifier for reservation information received by the reservation receiving portion, and stores the reservation information in association with the reservation information identifier.

8. The facility reservation apparatus according to claim 4,
wherein the information related to facility use comprises at least one of the group consisting of information about the use of public transportation to a facility, road information, parking lot information, information about the grounds of a facility, and information about the vicinity of a facility.

9. A facility reservation method that receives input of reservation information including a date/time of a reservation from a user terminal and performs a facility reservation, comprising:
(a) a step of receiving input of reservation information including a date/time of a reservation from the user terminal;
(b) a step of receiving a request for information related to facility use from the user terminal so that the user can use the time until the time of the reservation effectively; and
(c) a step of providing the requested information related to facility use to the user terminal.

10. The facility reservation method according to claim 9,
wherein the information related to facility use changes over time;
wherein, in step (a), a reservation information identifier is issued for the received reservation information, and the reservation information identifier is communicated to the user; and
wherein, in step (b), in the event of a request for information related to facility use from the user terminal, information related to facility use that is related to the date/time of the reservation included in the reservation information is obtained based on the reservation information identifier of the user.

11. The facility reservation method according to claim 9,
wherein the information related to facility use comprises at least one of the group consisting of information about the use of public transportation to a facility, road information, parking lot information, information about the grounds of a facility, and information about the vicinity of a facility.

12. A computer-executable program for processing of a facility reservation, in which input of reservation information including a date/time of a reservation is received from a user terminal and a facility reservation is carried out, comprising:
(a) a step of receiving input of reservation information including a date/time of a reservation from the user terminal;
(b) a step of receiving requests for information related to facility use from the user terminal so that the user can use the time until the time of the reservation effectively; and
(c) a step of providing the requested information related to facility use to the user terminal.

13. The program according to claim 12,
wherein the information related to facility use changes over time;
wherein, in step (a), a reservation information identifier is issued for the received reservation information, and the reservation information identifier is communicated to the user; and
wherein, in step (b), in the event of a request for information related to facility use from the user terminal, information related to facility use that is related to the date/time of the reservation included in the reservation information is obtained based on the reservation information identifier of the user.

14. The program according to claim 12,
wherein the information related to facility use comprises at least one of the group consisting of information about the use of public transportation to a facility, road information, parking lot information, information about the grounds of a facility, and information about the vicinity of a facility.
